# EUROPEAN PATENT APPLICATION

(11) **EP 3 838 556 A1**
(43) Date of publication of application: **23.06.2021**
(21) Application number: 20215396.1
(22) Date of filing: 18.12.2020
(51) Int. Cl.: B29C 64/118, B29C 64/209, B29C 64/295, B33Y 30/00

(54) **3D PRINTHEAD**

(30) Priority: 18.12.2019 EP 19461617; 20.12.2019 IT 201900025033
(71) Applicant: 3DGence Spolka z ograniczona odpwiedzialnoscia, 40-085 Katowice (PL)
(72) Inventor: Wolnicki, Przemyslaw, 42-100 Klobuck (PL); Turzynski, Filip, 81-741 Sopot (PL); Wilk, Krzysztof, 41-400 Myslowice (PL); Janus, Bartosz, 41-940 Piekary Slaskie (PL)
(74) Representative: AOMB Polska Sp. z.o.o.

(57) **Abstract**

The disclosure relates to a 3D printhead comprising a head body (8), a print nozzle (6), a tunnel leading the material to the print nozzle (6) through a cold zone and a hot zone, and a heating block, characterized in that the heating block (3) is attached to the head body (8).

## Description

### Technical field

The present invention relates to a 3D printhead.

### Background art

In 3D printers technology of layered deposition modeling material, the printhead is one of the crucial elements where print material in filament form is plasticized and extruded, creating a spatial model.

There are many known solutions for the construction of print heads, differing in design, range of operating temperatures, internal construction, the material from which individual elements are made, especially those working with plasticized material. In most common printheads, a printing nozzle has a diameter up to 1mm, preferable 0.4mm, through which the material is extruded, the hot zone in which the material is plasticized, preceded by a cold zone in which the material is not plasticized.

It is known a printhead in which a PTFE tube is used to guide material in the hot zone. It provides low friction of the plasticized material and thermally insulates melted material from printhead body. This solution is technically simple. The disadvantage of this solution is the internal construction of the printhead, in which the PTFE tube is in the hot zone, while in the cold zone a tube of another material, preferably metal. Material leaks may occurat the contact point of these components. Another problem is the temperature resistance of PTFE, which is usually around 270 Celsius degrees, which is too low for working with specialized materials such as polyether ether ketone or polycarbonate.

A printhead is known in which the cold zone is cooled by a radiator or a radiator assembly with a fan. The guiding tunnel can be cored in the radiator, or a dedicated tube can be used. In this solution, the radiator or the tube is used as a mounting point for the printhead.

### Summary of the invention

The object of the present invention is a printhead, that will be reliable, and preferably suitable to work with high temperatures over 400°C and preferably compatible with a wide variety of materials for 3D printing, including metal and polymer composites.

The present invention relates to a 3D printhead comprising a head body, a print nozzle and a tunnel for leading a material to the print nozzle through a cold zone and a hot zone comprising a heating block, wherein the heating block is attached to the head body.

Preferably, there is a shield around heating block.

Preferably, the shield is made of a material with high thermal radiation insulation capacity Preferably, the tunnel leading the material to the print nozzle is a one-piece metal tube passing through the print nozzle, hot zone and cold zone.

Preferably, the cold zone is a metal tube cooled by airflow.

Preferably, the print nozzle and metal tube are one element.

Preferably, a heat shield is mounted on the print nozzle.

### Brief description of Drawings

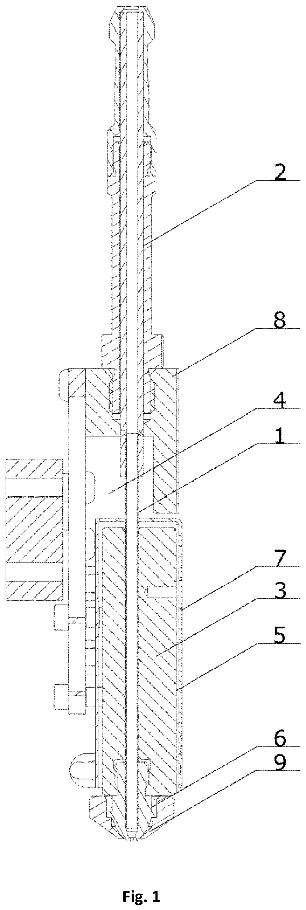

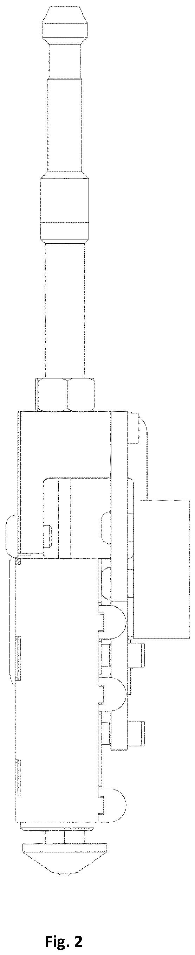

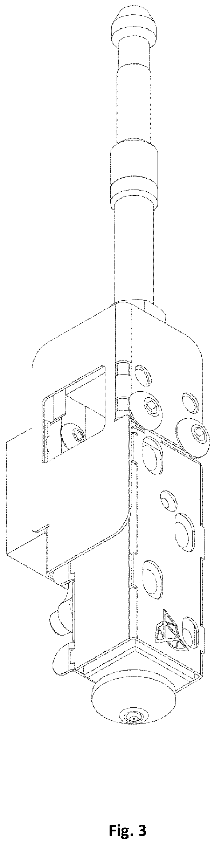

The present of the invention is illustrated by the embodiment in the drawing, in which Figure 1 is a cross-sectional view of the print head, Figure 2 is a side view of the print head, and Figure 3 is an oblique view of the print head.

### More detailed description of preferred embodiments

The device according to the embodiment uses a metal tube 1 extending through the nozzle 6, hot zone 5 and cold zone 4.

The hot zone comprises a heating block 3 in which mounted is at least one heating element, e.g. a heater, a printing nozzle 6 and preferably a temperature sensor. The printing nozzle 6 and the tube 1 are preferably one-piece element. Preferably, a heat shield 9 is mounted on the print nozzle, e.g. made of PTFE. A screen 7 is located around the heating block 3, preferably made of a material (e.g. metal) with high thermal radiation insulation capacity, i.e. low heat capacity and low thermal conductivity with high heat reflectivity. The heating block 3 is attached to the head body 8, preferably with at least 2 screws, the diameter of which should be as small as possible in orderto minimize heat loss. The head body 8 is preferably connected to a printing machine.

The cold zone of the printhead is a metal tube 1, preferably cooled by air flow. The metal tube 1 in the cold zone extends inside the body, which in the cold zone is constructed in a way that allows free air flow, e.g. has at least one vent to provide air flow. In the upper part of the cold zone, the tube is fixed in the body 8 to maintain the rigidity of the structure. A leading sleeve 2 is attached to the body supplying material to the metal tube 1.

The presented invention in which the heating block of the printhead is fixed to the body ensures the mechanical strength of the tool. It also enables use of a much larger heating block, compared to the printheads in which a heating block is mounted to the tube for guiding material.

The heat shield minimizes the disadvantageous heat radiation from the printhead to the manufactured item. Shield around the block heater provides thermal insulation for the preferred reliability. The metal tube extended inside the printhead is preferably made without joints, which eliminates the possibility of leaks.

An advantage of the invention is that the construction of the printhead prevents unwanted leaks that cause failures. Another advantage is that the printhead is adjusted to work with temperatures above 400 degrees Celsius and with many 3D printing materials, in particular with metal and high-temperature polymer composites. Method of making a cold zone in the present invention allows for effective heat excess removal with the benefit for the quality of the plasticized material.

## Claims

1. A 3D printhead comprising a head body (8), a print nozzle (6) and a tunnel for leading a material to the print nozzle (6) through a cold zone (4) and a hot zone (5) comprising a heating block (3), **characterized in that** the heating block (3) is attached to the head body (8).

2. The 3D printhead according to claim 1, wherein it comprises a shield (7) around the heating block (3).

3. The 3D printhead according to claim 2, wherein the shield (7) is made of a material with high thermal radiation insulation capacity.

4. The 3D printhead according to claim 1 or 2 or 3, wherein the tunnel leading the material to the print nozzle (6) is a one-piece metal tube (1) passing through the print nozzle (6), the hot zone (5) and the cold zone (4).

5. The 3D printhead according to claim 4, wherein the cold zone comprises a metal tube (1) cooled by airflow.

6. The 3D printhead according to claim 4 or 5, wherein the print nozzle (6) and the metal tube (1) are one element.

7. The 3D printhead according to any of the preceding claims, wherein a heat shield (9) is mounted on the print nozzle (6).
